# EUROPEAN PATENT SPECIFICATION

(11) **EP 2 963 548 B1**
(45) Date of publication and mention of the grant of the patent: **31.08.2022**
(21) Application number: 14175074.5
(22) Date of filing: 30.06.2014
(51) Int. Cl.: G06F 9/54, G06F 11/16, H04L 65/40, H04L 67/10, G06F 11/20, G06F 11/14, G06F 16/00

(54) **Method for enhancing the reliability of a telecommunications network, system, telecommunications network and program**
Verfahren zur Verbesserung der Zuverlässigkeit eines Telekommunikationsnetzwerks, System, Telekommunikationsnetzwerk und Programm
Procédé permettant d'améliorer la fiabilité d'un réseau de télécommunications, système, réseau de télécommunications et programme

(43) Date of publication of application: 06.01.2016
(73) Proprietor: Deutsche Telekom AG, 53113 Bonn (DE)
(72) Inventor: Agapi, Andrei, 1064CN Amsterdam (NL)
(74) Representative: Schwöbel, Thilo K.

(56) References cited:
- US-A1- 2004 024 794

## Description

### BACKGROUND

The present invention relates a method for enhancing the reliability of a telecommunications network, the telecommunications network comprising a plurality of network nodes running at least a first network process and a second network process, wherein a message or a request of a specific kind, being directed from the first network process to the second network process, is processed by being produced as a specific element of a queue. The present invention further relates to a system for enhancing the reliability of a telecommunications network, the telecommunications network comprising a plurality of network nodes running at least a first network process and a second network process wherein the system is configured such that a message or a request of a specific kind, being directed from the first network process to the second network process, is processed by being produced as a specific element of a queue.

Currently, telecommunications networks need to handle large amounts of data across many servers or network nodes, striving to provide high availability of network services with no single point of failure.

The increased sophistication of computer networking, including virtual machine migration, dynamic workloads, etc. increase the requirements for network control of telecommunications networks. Making network management decisions often requires knowledge of the network state of the telecommunications network. Single points of failure should be avoided such that an enhanced reliability of the telecommunications network results. In the context of message queuing systems document US 2004/024794 A1 discloses a buffered queue architecture in which multiple subscribers can dequeue messages from the queue and a reference count in the message header is used to keep track of how many subscribers have dequeued the respective message.

### SUMMARY

An object of the present invention is to provide cost effective solution for enhancing the reliability of telecommunications networks comprising a multitude of network nodes.

The object of the present invention is achieved by a method according to claim 1.

According to the present invention, a method is provided for database queues to be used in telecommunications networks, e.g. in the terastream telecommunications network, e.g. by the YANG router and other RT-OSS processes to communicate and sync in a fault-tolerant manner.

The queue implementation according to the present invention is fault tolerant, supporting N-way redundancy and having no central points of failure or special designated network nodes. According to the present invention, the queue comprises a plurality of elements, and the queue is handled using at least one queue database. The plurality of elements in the queue are able to be produced by producers - which are, in the context of the present invention, also called producer network processes -, and the elements in the queue, once produced, are able to be either only read or read and (later on) consumed by so-called consumers, which are, in the context of the present invention, also called consumer network process.

The data of the queue itself, i.e. queue data, is replicated in a distributed database (such as a Cassandra database), and synchronization / serialization / locking are also implemented in a distributed/fault tolerant manner, e.g. using ZooKeeper. It supports an arbitrary number of client processes (producers and consumers). The queue semantics preferably refer to
-- different applications, each application being related to by means of an application identity or appID,
-- different groups of consumer network processes (or shards of consumer network processes), each group or shard being related to by means of a shard identity or shardID.

The queue is multi-producer, multi-subscriber, and replayable, allowing consumers to register and be notified when their image of the queue is stale (i.e. new messages were enqueued since they last fully read the queue). Consumers can be organized in several appIDs, as well as independent replica groups / shardIDs (the latter can be used for sharding, i.e. load distribution of work).

According to the present invention, the queue is advantageously initialized with a certain replication_factor (i.e. the number of consumer replicas, this number being referred to by the term "replication_factor"). This means that, each element in the queue (i.e. each concerned element, which means that only queue elements of or related to a specific shard and having a specific application ID are considered) must be read by at least a certain number of consumers, this number being referred to by the term "replication_factor", to be considered "globally read". Therefore, for each consumer, two read heads, hereinafter also called read indicators, are relevant:
-- its private_read_head (or private read indicator) corresponding to the position in the queue such that all queue entries (or queue elements) before it have been read by this consumer, and
-- the global_read_head (or global read indicator) corresponding to the position in the queue such that all queue entries (or queue elements) before it have been read by at least the number of consumers indicated by the value of the replication_factor constant.

The global_read_head (of a queue (comprising only elements of one application identity) or of the elements in a queue being related to the same application ID) might be updated or modified (i.e. typically moved forward) every time a consumer reads some relevant element of the queue. According to the present invention, the queue application programming interface supports un-read operations, whereby a consumer notifies the queue that, for any reason (e.g. load balancing or failures upstream), it needs to un-read some elements (that it hasn't consumed yet). Consequently, an un-read operation might cause the global_read_head to be modified accordingly (i.e. typically decreased / moved back).

Similarly, un-registering a certain consumer from the queue has an effect similar to it un-reading all entries it has read, but not yet consumed. Similarly to the read heads (or read indicators), two consume heads (or consume indicators) are maintained for the consume operation:
-- a private_consume_head (or private consume indicator) for each consumer, marking the position such that all elements in the queue preceding it have been consumed by the consumer, and
-- a global_consume_head (or global consume indicator), representing the position such that all preceding elements of the queue have been consumed by any consumer (or consumer replica concerned, i.e. the number of replication_factor consumers. According to the present invention, unlike the situation related to the read operation, consumed elements can never be un-consumed as the assumption goes that these queue elements have been moved up-stream for processing, e.g. inserted in a different fault tolerant reply- or upstream-queue.

According to the present invention, it is advantageously possible that the "Head of Queue", i.e. elements from the beginning of the queue and up to a certain position (e.g. the global consume head, or the consumer's previous private read head), can be replayed back to a consumer. This feature can be used e.g. to catch up / integrate a new consumer replica to a replica group by giving it the consistent state that the other group members have. Furthermore, it is possible and preferred according to the present invention that the HoQ can be "maintained" in various ways based on policy:
-- kept as such in the distributed database,
-- deleted, totally or partially
-- compressed, using an application-provided compression function;
like deletion, compression can be applied to all or only some of the queue head state (e.g. only to entries older than a certain time to live (TTL); these choices being up to the application policy. If compression is applied, the replay functions will return the respective part of the head of the queue in compressed form, rather than the original entries.

According to the present invention, it is advantageously possible to realize a queue handling that realizes the following features or advantages of the queue:
-- It keeps track of registered consumers and up to which point in the queue each consumer has read, and consumed; these two operations being different operations; this way, any consumer can be disconnected or crash or be killed at any time, then restart and resume reading from its previous position; furthermore, the consumer can also replay all or part of the queue that its crashed predecessor read, and thus be caught up with its own previous state.
-- Several consumer replicas (up to a configurable number of consumer replicas, this number being referred to by the term replication_factor) can process or de-queue the same object (i.e. element of the queue), for fault tolerance purposes, e.g. to maintain a set of "warm" replica processes; a new replica process can join and be caught up with the state of the others in its replica group; this way, any replica can be disconnected or can crash or can be killed at any time, then restart and rejoin the replica group, grabbing its previous state consistently.
-- Consumers can be organized in shards to distribute the total work according to a master-worker style, two consumers (or consumer network processes) in different shards are guaranteed to process mutually exclusive subsets of queue entries.
-- Consumers are organized in application identities, each application being handled separately; it is especially preferred to apply a hierarchy is as follows: applDs -> shards - > consumers, i.e. an application can have multiple shards, and each shard in turn can have multiple consumers (i.e. replicas of consumers).
-- Per-message arbitrary priorities; de-queueing (i.e. the removal of elements of the queue from that queue) happens in priority order of queue entries (after taking into account all other elements: shardID, appID, no_replicas).
-- Queue elements can be peek-ed (which has no effect on queue state) or read and consumed (in two different steps); the two different steps are advantageous in order to allow a consumer process to differentiate between reading an entry from the queue versus processing it (or moving it to an upstream queue in the workflow for further processing); it is thereby advantageously possible that, upon a crash, the process can easily reprocess/re-push upstream elements it has read, but not yet consumed
-- Furthermore, it is especially advantageous that consumers are able to register and/or to unregister, and also un-read elements (which will affect queue state such as global headers); however, consumer typically cannot 'un-consume' elements of the queue once they were consumed.
-- Any "Head of Queue" (hereinafter also designated by the term "HoQ") (i.e. elements from the beginning of the queue and up to a certain point of the queue) can be replayed, to facilitate bringing new consumer replicas up to speed; for instance, a returning consumer can be replayed the state it previously read before it crashed (up to its 'private_read_head'), or can be replayed the entries up to the 'global_consume_head' and 'global_read_head' respectively
-- The queue also implements various policies for handling Head of Queue, e.g. deleting, compressing or simply keeping their entries; HoQ compression can be application-specific (e.g. a series of 'link up'/'link down' events for a network link can be replaced by only the last event); the application program interface allows HoQ compression to be done either by a separate maintenance process, or even by producers/consumers themselves
-- Consumers are notified of queue changes (if they weren't already notified since their last read) and let know, when reading, if they currently dequeued everything in the queue (at all priorities), so they can stop attempting to read until the next notification
-- The queue remains consistent in face of contention from multiple producers (i.e. all reads will see the same order of entries in the queue at any time) and multiple consumers (consistency in terms of consumer contention over shards and global read heads is enforced), even in the distributed version.

According to a preferred embodiment of the present invention, it is preferred that - besides the message or the request of the specific kind, being directed from the first network process to the second network process - a message or a request of a further specific kind, being directed from the second network process to the first network process, is processed by being produced as a further specific element of a further queue, the first network process corresponding to the first consumer network process of the further specific element of the further queue, and a fourth network process corresponding to the second consumer network process of the further specific element of the further queue,
wherein in the sixth step, the specific element of the queue is deleted from the queue only in case that the further specific element of the further queue is produced.

Only after successfully enqueueing (i.e. producing) the message or the request of the further specific kind - e.g. a reply message or answer to the initial message or request of the specific kind - the second network process (which acts as a consumer of the initial message or request of the specific kind) consumes (or deletes from the queue) the queue element related to the initial message or request of the specific kind. Thereby, it is advantageously possible according to the present invention that even if all replicas (i.e. consumer processes) of the second network process crash, it is possible to correctly recover the state of such processes upon restart of a new instance of such a process as such a newly restarted network process (or replica thereof) can check the queue (i.e. the queue handling the element related to the initial message or request of the specific kind) and is able to look for any elements that were read but not consumed by the processes that crashed. It is possible then to safely reprocess these elements of the queue and re-enqueue the reply in the further queue (i.e. the queue having the, as one of its elements, the queue element relating to the message or the request of the further specific kind), at most causing some duplicate replies, which can be trivially filtered out by the first network process upon receipt thereof.

According to the present invention, the message or the request of the specific kind corresponds to an application such that different elements of the queue that
-- belong to the queue
-- but correspond to the same application
are processed separately from other elements of the queue that correspond to a different application.

Thereby, it is advantageously possible according to the present invention that different applications or queue elements related to different applications (or application identifiers) are treated separately.

According to the present invention, it is furthermore preferred that one of the elements of the queue are read or read and consumed
-- either by a plurality of consumer network processes of a first group of consumer network processes (first shard of consumer network processes),
-- or by a plurality of consumer network processes of a second group of consumer network processes (second shard of consumer network processes).

Thereby, it is advantageously possible according to the present invention that different groups of consumers or consumer network processes can share the handling of queue elements such that a queue element is either treated by consumers of the first group of consumers (or shard) or by consumers of the second group of consumers (or shard) but not in a mixed configuration.

According to still a further preferred embodiment of the present invention, a priority indicator is assigned to the elements of the queue, the priority indicator being able to correspond to a number of different values, wherein the elements of the queue having the same value of the priority indicator are processed separately from other elements of the queue having a different value of the priority indicator.

Thereby, it is advantageously possible according to the present invention that different priorities or queue elements related to different priorities (or priority indicators / priority number) are treated separately.

According to the present invention, it is furthermore preferred that the queue database of the queue is a local database.

According to still another preferred embodiment of the present invention, the queue database of the queue is a distributed database.

Furthermore, the present invention relates to a system according to claim 7.

According to the present invention, it is thereby advantageously possible to provide a system having a queue implementation that is fault tolerant, supporting N-way redundancy and having no central points of failure or special designated network nodes.

It is furthermore preferred according to the present invention, and especially with respect to the inventive system, that the system is configured such that - besides the message or the request of the specific kind, being directed from the first network process to the second network process - a message or a request of a further specific kind, being directed from the second network process to the first network process, is processed by being produced as a further specific element of a further queue, the first network process corresponding to the first consumer network process of the further specific element of the further queue, and a fourth network process corresponding to the second consumer network process of the further specific element of the further queue,
wherein the system is configured such that the specific element of the queue is deleted from the queue only in case that the further specific element of the further queue is produced.

Furthermore, the present invention relates to a telecommunications network according to claim 11.

According to the present invention, it is thereby advantageously possible to provide a telecommunications network having a queue implementation that is fault tolerant, supporting N-way redundancy and having no central points of failure or special designated network nodes.

Additionally, the present invention relates to a program comprising a computer readable program code which, when executed on a computer or on a network node of a telecommunications network or on a plurality of network nodes of a telecommunications network, causes the computer or the network node of the telecommunications network and/or the plurality of network nodes of the telecommunications network to perform an inventive method.

Still additionally, the present invention relates to computer program product for enhancing the reliability of a telecommunications network, the computer program product comprising a computer program stored on a storage medium, the computer program comprising program code which, when executed on a computer or on a network node of a telecommunications network or on a plurality of network nodes of a telecommunications network, causes the computer or the network node of the telecommunications network and/or the plurality of network nodes of the telecommunications network to perform an inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network or a part thereof, comprising a first network node and a second network node, the first and second network nodes running a plurality of network processes.
Figure 2 schematically illustrates the handling of a queue involving different private and global read indicators as well as different private and global consume indicators.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

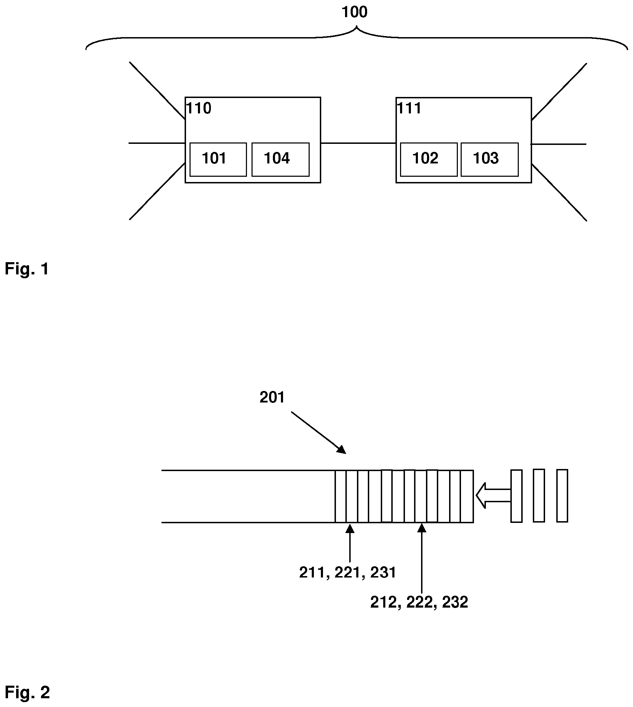

In Figure 1, a telecommunications network 100 or a part thereof, comprising a first network node 110 and a second network node 111, the first and second network nodes 110, 111 running a plurality of network processes. The network nodes 110, 111 are typically connected to other network nodes of the telecommunications network 100, these other network nodes of the telecommunications network 100 being not shown in Figure 1 for the sake of simplicity. In the example shown in Figure 1, the first network node 110 runs a network process indicated by reference sign 101, which is hereinafter also designated by "first network process", and a network process indicated by reference sign 104, which is hereinafter also designated by "fourth network process". Furthermore, in the example shown in Figure 1, the second network node 111 runs a network process indicated by reference sign 102, which is hereinafter also designated by "second network process", and a network process indicated by reference sign 103, which is hereinafter also designated by "third network process".

In Figure 2, the handling of a queue 201 involving different private and global read indicators as well as different private and global consume indicators according to the present invention is schematically shown. The queue 201 comprises a plurality of queue elements (not designated by a reference sign) schematically represented by rectangles. Upon the production or issuance of new messages or requests, new queue elements (schematically illustrated on the right hand side of Figure 2) are added to the queue (this addition being schematically represented by an arrow in Figure 2). The elements of the queue 201 are handled (using read operations, un-read operations as well as consume operations) by different consumer processes and the state of the queue handling is indicated by read indicators as well as consume indicators. A first private read indicator is designated by reference sign 211. A second private read indicator is designated by reference sign 221. A global read indicator is designated by reference sign 231. A first private consume indicator is designated by reference sign 212. A second private consume indicator is designated by reference sign 222. A global consume indicator is designated by reference sign 232.

The queue 201, comprising a plurality of elements, is handled using at least one queue database. Each queue element of the plurality of queue elements of the queue 201 is able to be produced by producer network processes (such as the first, second, third or fourth network process 101, 102, 103, 104). Furthermore, each queue element of the plurality of queue elements of the queue 201 is able to be
-- read or
-- read and consumed
by at least a first consumer network process and a second consumer network process (i.e. the producer network process and the first and second consumer network processes are associated, respectively, to elements of the queue 201).

The first private read indicator 211 is assigned to the first consumer network process such that the first private read indicator 211 is modified upon a reading operation of the first consumer network process. The second private read indicator 221 is assigned to the second consumer network process such that the second private read indicator 221 is modified upon a reading operation of the second consumer network process. The global read indicator 231 is assigned to the first and second consumer network processes, and the global read indicator 231 is modified upon a reading operation of the first and second consumer network processes. The first private consume indicator 212 is assigned to the first consumer network process such that the first private consume indicator 212 is modified upon a consuming operation of the first consumer network process. The second private consume indicator 222 is assigned to the second consumer network process such that the second private consume indicator 222 is modified upon a consuming operation of the second consumer network process. The global consume indicator 232 is assigned to the first and second consumer network processes, and the global consume indicator 232 is modified upon a consuming operation of the first and second consumer network processes.

According to the present invention, the second network process 102 corresponds to the first consumer network process of the specific element of the queue 201 corresponding to a message or a request of a specific kind and wherein the third network process 103 corresponds to the second consumer network process of the specific element of the queue 201, corresponding to the message or the request of the specific kind.

Further details and examples of the queue handling according to the present invention are provided as follows:

### Shards and work distribution

Besides the replica mechanism of a plurality of consumers (i.e. network processes handling queue elements), consumers can be organized in shards, which are used for distribution of work, in the style of a master-worker queue. Specifically, along with its unique consumer ID, a consumer passes, upon registration, a separate "shard ID", which may be shared by several consumers (i.e. several consumers belong to one group (or shard) of consumers). The mechanism whereby consumers are assigned to shards is external to the queue.

The queue guarantees that, if a queue entry was given to at least one consumer from a certain shard A, it will never be given to consumers from another shard B different to shard A. It may however be given to any number of consumers from the same shard A. Using shards has an effect on how 'read' (and 'peek') operations happen and how read heads are maintained.

Namely, when calling a 'read(maxEntries)' on the queue, a consumer from shard A will not get any elements that were already 'grabbed' by a different shard B, even if they are after its current read head. All the (at most) 'maxEntries' elements returned by the read were either free (not grabbed by any consumer) or were previously grabbed by a different consumer from shard A.

The read heads are also maintained accordingly: the consumer's private_read_head is moved ahead, skipping any elements grabbed by different shards; also, the global_read_head is calculated accordingly, based on the new private read head.

### Application Identifiers

Besides shards, consumers are also organized in different application identifiers or application IDs. These represent various applications that may be subscribed to the same queue (e.g. a server A processing requests, and a separate stats logger / observer application B).

Consumers from different applDs are handled totally independently, regardless of their shardID and of how many replicas from that shard have read an element.

I.e. a different set of read and consume heads (global as well as private) are maintained for each appID (e.g. it is possible that, at a given time, 5 replicas from 3 shards have read data up to a point for app A, but consumers from app B haven't read anything yet).

The appID is also given by the consumer, along with his consumerlD and shardID, upon registration to the queue (any consumer registration requires the full triplet [appID, shardID, consumerID]).

### Priorities

Elements enqueued to the queue are also attached a priority number or priority indicator. This causes elements with a higher priority to always be read / dequeued ahead of all existing elements of smaller priority (or smaller value of the priority indicator).

Internally, the queue is preferably implemented as a set of (non-priority) queues, one per each priority (i.e. in case that a first and a second value of the priority indicator exists (or is used in connection with the queue 201), the two different priority indicators (i.e. values thereof) are preferably treated as two independent queues (or sub-queues of the queue 201)).

This is also true for the distributed queue implementation, where a queue for each priority is implemented as a separate database row, e.g. a Cassandra row. However, consumer membership, signaling and locks are preferably unified, i.e. common for all priorities (or sub-queues of different priorities). De-queuing processes always happen to higher-priority elements first and private and global read heads are maintained per each sub-component queue (i.e. for each priority or each value of the priority indicator).

### Queue API

The queue implements the following application programming interface or API (in the following presented in a Java-like notation for the different functions of the queue API):
-- registerConsumer(String consumerlD, String shardID, String appID, Watcher w, boolean overwrite):
-- adds a consumer to the queue; the consumer will be notified of subsequent enqueues to the queue, from any producer via the Watcher callback it implements
-- if several such enqueue operations (or production operations) happen successively, a single notification is sent per consumer, notifying it that its state is stale; it can subsequently perform a read() operation on the queue, dequeueing all entries it should be getting since its last read (also based on its shardID)
-- only at the point it completely dequeues all elements it can get (it will know this from the read() function return status), will it receive another notification, as subsequent enqueues happen
-- the "overwrite" flag determines whether this consumer should ignore and overwrite the previous state (read heads) of any consumer with the same appID/shardID/consumerID (start fresh) or keep that previous state in the queue (a returning consumer)
-- unregisterConsumer(String consumerID)
   -- removes a consumer from the queue
   -- this has the following effect on queue heads:
      -- the state of his "private" queue heads (read_ and consume_head (for each priority)) is removed;
      -- the global_read_heads are re-calculated as if this consumer's private read head was rolled back to the global_consume_head (as if consumer unread everything that wasn't consumed); this again happens for each priority;
      -- the global_consume_head is un-affected for all priorities (elements cannot be un-consumed)
-- put(byte[] entry, int prio)
   -- enqueues a blob of data into the queue, with priority 'prio' (in the corresponding priority queue)
   -- linearizability of operations is ensured; i.e., in face of multiple enqueuers calling this operation, we ensure the same order of enqueued entries is seen by all database servers replicating the queue, and consequently by all consumers
-- peek(String consumerlD, int maxEntries, SortedMap<lnteger, ReadResult> readResults)
   -- returns at most 'maxEntries' following entries this consumer would get at this point if it did a read, without affecting the queue state (moving private or global read heads)
   -- as with reads, entries are returned in priority order, highest priorities first; thus, the result 'SortedMap' includes 1 vector of entries (as a 'ReadResult' object) per each priority dequeued
-- read(String consumerlD, int maxEntries, SortedMap<Integer, ReadResult> readResults)
   -- gives back to this consumer at most 'maxEntries' queue entries following his current read head, based on its shard ID and entry priorities
   -- this consumer's private read head, as well as the global_read_head are updated accordingly:
      -- the consumer's private_read_head for each priority queue is updated such that all queue entries before it have either been read by this consumer or have been grabbed by consumers from a different shard than this consumer;
      -- the global_read_head for each priority queue of this consumer's appID is updated such that all queue entries before it have been read by at least replication_factor consumers
   -- returns as status whether the read exhausted the queue completely for this consumer (based on his appID and shard); if this is true, the consumer knows it will receive a notification next time anything gets enqueued, therefore it can stop attempting to read in the meantime.
-- unread(String consumerlD, int prio, int new_read_head)
   -- a consumer can call this function to move his private read head for a certain priority queue back from its current position (e.g. if he decides he cannot consume those entries for any reason: load balancing, failures upstream etc)
   -- the new read head cannot be set to be before the queue's current global_consume_head
-- consume(String consumerlD, int prio, int new_consume_head)
   -- a consumer calls this function to tell the queue it has consumed entries up to the 'new_consume_head', for priority queue 'prio'
   -- the private consume_head of that consumer for that queue is updated to that position, and the global_consume_head for that queue is also updated (such that all entries preceding it have been consumed, by any consumer)
-- replay_private_read_state
   replay_private_consume_state
   replay_global_read_state
   replay_global_consume_state
      (String consumerlD, SortedMap<lnteger, ReadResult> result)
   -- set of functions used by a consumer to replay all entries, from the very beginning of the queue and up to, respectively:
      -- the private_read_head (items it has previously read) of this consumer;
      -- the private_consume_head (items he has previously consumed) of this consumer;
      -- the appID's global_read_head (items "globally read" by his app) of this consumer;
      -- the appID's global_consume_head (items "globally consumed" by his app) of this consumer;
   -- a separate Head of Queue is returned for each priority
   -- depending on HoQ "compression policy", this function can give back:
      -- the queue entries as originally enqueued;
      -- a compressed state of the queue head (as compressed by the compress_consume_state() function below), possibly along with remaining uncompressed entries;
      -- nothing or only part of the queue head (if compression policy is to delete all or part of the HoQ entries)
   -- this compressed state (if exists) is contained as a separate field within the ReadResult object.
-- compress_state(int start_index, int end_index, byte[] compressed_state, int prio)
   -- replace elements in the sub-queue of priority prio, starting from queue entry index start_index and up to end_index, with compressed blob compressed_state;
   -- compressed_state can either be calculated by application logic, or can be some generic compression function;
   -- also, there are some convenience functions that wrap around the more generic compress_state (e.g. compress_global_read_state, compress_global_consume_state etc).

### Global read heads bookkeeping method

In the following, more details of the inventive method for maintaining global read heads are described. Global read heads are modified when either read() or unread() operations are executed by individual consumers, causing their private read heads to move. The un-subscription of a certain consumer is modeled as an un-read of that consumer (down to the global consume head). The algorithm is described for a single priority queue and a single appID (separate priorities can be implemented as separate queues and separate applDs have their read heads book-kept separately).

When a read() request comes from a consumer, its private read head will progress up to a certain new_read_head, from a certain old_read_head. The value of new_read_head will be calculated as described in sections above, taking into account the consumer's shardID and the state of the elements in the queue (skipping elements that were grabbed by different shards).

Similarly, when an un-read() request arrives, the consumer specifies to which new_read_head to regress old_read_head to.

According to the present invention, a vector RH[] of read heads, one per each possible replication factor, is maintained regardless of the fact that the queue has only one replication factor specified. In the following, the number of consumers that have read up to a certain queue position (the "virtual" replication factor), is called replication count. That is, even if the queue has replication_factor equal to 3, a vector of read heads is maintained, one for each of 1, 2, 3, 4, 5,... replication counts. The term "RH[i]" corresponds to the position in the queue such that all elements (of the queue) before that position were read by at least i consumers. The global_read_head then corresponds to RH[replication_factor].

There is an entry in RH up to the number of maximum replication count (i.e. the number of elements in RH), corresponding to the number of consumers currently subscribed and the vector indicates what they have read to this point (it is a dynamically growing vector). E.g. assuming we have five consumers that have read up to queue positions 7, 9, 10, 12 and 15 respectively, RH will have five entries (because there is no element that was read by six or more consumers). Preferably, these entries are stored in the RH vector in decreasing order of their replication count (to more intuitively reflect the position of these heads in the actual queue, starting from the queue head on the right):
-- RH[0] = (queue_postion = 7; replication_count = 5)
-- RH[1] = (9; 4)
-- RH[2] = (10; 3)
-- RH[3] = (12; 2)
-- RH[4] = (15; 1)

Assuming 2 (or more) consumers have read to some same position (e.g. the 5 consumers have read to positions 7, 9, 12, 12 and 15 of the queue, respectively), there will still be 5 entries in RH, just that two of them will simply be equal (corresponding in this case to queue positions such that both 2 and 3 consumers have read up to that point):
-- RH[0] = (7; 5)
-- RH[1] = (9; 4)
-- RH[2] = (12; 3)
-- RH[3] = (12; 2)
-- RH[4] = (15; 1)

Next, the pseudocode for the algorithms for updating RH[] (and implicitly global_read_head) upon a consumer reading (new_read_head > old_read_head) and un-reading (new_read_head < old_read_head) are schematicalls given.
Algorithm for updating the RH vector, and global_read_head, upon a read by any consumer:

```
 Read (new_rh, old_rh) : // new_rh > old_rh
        if (old_rh == HEAD_OF_QUEUE)
           // This is first read by some consumer.
           // Insert a new RH[] entry at beginning of vector, corresponding to
           // largest existing counter + 1. It will be filled next by the normal
           // process of copying the header position value from the next
           // element in vector. All other entries in RH are shifted to the right
           Insert_At_Head(RH[], (min(RH[0].position, new_rh) RH[0].rep_count + 1))
        for each RH[i] in RH
           if (RH[i] in (HEAD_OF_QUEUE, old_rh) )
                  // Nothing, entry unchanged.
           elif (RH[i] in [old_rh, new_rh) )
                  // Copy position value from vector element to the right, while
                  // preserving rep_count field (corresponds to incrementing read
                  // header for affected region). If new_rh smaller than position of
                  // RH[i+1] (or if there's no other element in the RH[] vector),
                  // update RH[i] with new_rh instead.
                  RH[i].position = min (RH[i+1].position, new_rh)
           elif (RH[i] in [new_rh, TAIL_OF_QUEUE))
                  // Nothing, entry unchanged.
           GLOBAL_READ_HEAD = RH[replication_factor- 1]
```

Algorithm for updating the RH vector, and global_read_head, upon an un-read by any consumer:

```
 Un-read (new_rh, old_rh) : // new_rh < old_rh
        for each RH[i] in RH, traverse vector "backwards" (from tail to head)
           if (RH[i] in (old_rh, TAIL_OF_QUEUE) )
                  // Nothing, entry unchanged.
           elif (RH[i] in (new_rh, old_rh] )
                  if (new_rh == HEAD_OF_QUEUE and i==0 )
                         // Consumer un-read everything, all the way to the
                         // HEAD_OF_QUEUE. We need to remove the first
                         // entry of RH[], as the highest overall replication
                         // count just decremented
                         Delete_Head(RH)
                  else
                         // "Common-case" un-read:
                         // Copy position value from vector element to the left,
                         // while preserving rep_count field (corresponds to
                         // decrementing read header for affected region). If new_rh
                         // greater than RH[i-1], update RH[i] with new_rh instead.
                         RH[i].position = max(RH[i-1].position, new_rh)
           if (RH[i] in (HEAD_OF_QUEUE, new_rh] )
                  // Nothing, entry unchanged.
           GLOBAL_READ_HEAD = RH[replication_factor - 1]
```

### Distributed Implementation of the Queue

The above mentioned API and respective methods can - according to the present invention -also be implemented in a local queue. In the following, the distributed implementation of the queue is described:

The queue is implemented using four components:
-- Queue data (actual data entries) as well as metadata (subscriber private read heads, global read heads, etc.) are replicated in a database, such as a Cassandra DHT.
   For a single-priority queue, all data and metadata pertaining to the queue is kept in a single Cassandra row.
   This means that all data is collocated within a Cassandra storage server (and replicated across multiple servers of course), as well as sorted, which makes queries and data chunking much more efficient. If some of the servers holding the queue data crashes, Cassandra automatically assigns the replica role to a new server and repairs the database by catching up the new replica with data from the others.
   For multi-priority queues, each priority sub-queue is implemented as a separate Cassandra row.
   Columns within the row implementing a queue are sorted by two values (column clustering keys):1) First by a string value describing the column (This starts with H: for "header" columns = metadata and with Q: for actual queue entries = data); and 2) Then by an integer index, which in the case of "Q:" data (queue entries) represents the actual index of the queue entry within the queue (FIFO insertion order); for "H:" metadata entries, the integer key is not used.
   Therefore, the Cassandra row is divided in two parts: header and actual entries, with entries ordered by their index in the queue and metadata ordered alphanumerically. Metadata in the header includes: total number of entries, total number of subscribers (consumers), private read and consume heads for each consumer, global read and consume heads for each appID and smallest item read by each consumer (needed at unread operations).
   In addition to actual queue entries, the data section also includes compressed queue state, if applicable. Queue compressor processes also register to the queue as regular consumers.
-- Queue synchronization primitives are implemented using a distributed synchronization service, e.g. the Zookeeper distributed synchronization service. There are two kinds of synchronization primitives used. Distributed locks are preferably implemented using the following locks:
   -- a queue tail lock, used by producers when they attempt to enqueue a new item into the queue; this is needed to ensure that all Cassandra replicas see the same order of enqueued queue elements;
   -- a queue head lock, used by consumers when they attempt to read one or more elements from the queue; this is needed to ensure consistency of consumer read heads; a consume lock, used by consumer when they call 'consume' on some elements in the queue; this is needed to ensure consistency of consume heads;
   -- a "queue creation" lock, used by processes upon start up to attempt creating & initializing the queue structures in the database if they find the queue doesn't already exist; this is needed to avoid inconsistency via creating the queue multiple times upon startup by multiple processes;
-- Consumer notification znode. This is a Zookeper znode, which consumers listen for updates to, and producers write to upon successful enqueue operations; A hierarchy of ephemeral Zookeeper znodes, one per each applicationlD/shardlD/consumerlD, used to keep track within the queue of which consumers are still alive; it can be used by various cleanup operations, e.g. to unread the data a consumer has not yet consumed by a different process, when that consumer crashes.
-- Much of the queue logic is implemented by the queue client library itself (running at every process using the queue). For instance, upon reading a number of elements from the queue, a consumer uses the global read head bookkeeping methods as described above to locally recalculate the queue header (values of his private read head, as well as global read head for his appID), then updates the queue Cassandra backend with the new values.

In terms of interaction between above modules, in general, to perform operations on the queue, the client library performs some of the following operations:
1. Acquire necessary locks
2. Read current queue header
3. Read or write data entries from the queue as appropriate
4. Update queue header entries, if applicable
5. Signal queue listeners, if applicable
6. Release any locks they acquired, if applicable

Write bulking is applied as much as possible on the above steps, e.g. various header entries and data entries are bulked in a single write operation to the Cassandra backend to improve performance.

### Example

One use for the database queue is as a communication medium between the YANG router and processes talking YANG.

For instance, a process A wishes to issue a YANG RPC request r of type F to a process B, which handles that type of request. A would send this RPC request to the YANG router, so it can be routed to B. The latter holds a routing table mapping YANG RPC names to database queues; in this case, it will map the RPC request of type F to a DB queue named Q(F).

B, as well as any other processes handling RPC requests of type F will have subscribed, upon being spawned, to queue Q(F). These processes might be externally organized in shards and replicas, e.g. by a Grid Manager external module. New replicas or shards handling RPCs of type F can be spun up dynamically, and be caught up from the queue, e.g. in response to some of them crashing. Shards can be dynamically added (by the same Grid Manager or a separate Load Balancer module) to improve load balance properties. Also, a different application (e.g. a RPC statistics module C) might subscribe to Q(F), with a separate appID.

The YANG Router(s), including any of its replicas/incarnations are producers to this queue. The queue guarantees that all consumers will see updates from YANG routers in the same order. Also, it ensures that this consistent state of the data is replicated on independent database servers, and, if any of these fails, is consistently repaired.

Further, after processing A's RPC request, B might want to send back a reply to A. This can also be done via a DB queue that A listens to. For instance, A adds, in the RPC request, the address of a queue that it is subscribed to, e.g. Q(ReplyF) (or Q(A) if it wants to handle all RPC replies in its main queue), along with a RPC ID r. B can then stamp the RPC reply with r and enqueue it in Q(ReplyF) (or Q(A)), from where it will be read by A (and any other interested processes), which can recognize/filter the reply based on its RPC ID r.

Only after successfully enqueueing the reply to r in Q(ReplyF), B can consume RPC r from its input queue Q(F). This way, even if all replicas of process B crash, it is advantageously possible to recover the state correctly upon restart: the newly restarted B replicas can check Q(F) and look for any RPCs that were read but not consumed by the processes that crashed. This newly restarted process B can then safely reprocess them and re-enqueue the reply in Q(ReplyF), at most causing some duplicate replies, which can be filtered out by process A upon receipt.

In this example, for sake of presentation, some aspects related to the YANG router have been simplified, e.g. in that process A typically also speaks to the YANG router via the router's own IPC queue, so that crash/restarts of the YANG router itself can recover previous RPCs it hasn't sent to B before crashing.

Also, by design, replies to RPCs will also be sent by B via the YANG router, rather than directly placing them in A's reply queue. The YANG router will then place them in Q(ReplyF) for A to process.

Arbitrarily complex process chains can be built this way, the only condition for correct recovery being that a process only consumes an entry from its input queue once it has actually processed it and placed any applicable replies into the relevant output queue upstream.

## Claims

1. Method for enhancing the reliability of a telecommunications network (100), the telecommunications network (100) comprising a plurality of network nodes (110, 111) running at least a first network process (101) and a second network process (102), wherein a message or a request of a specific kind, being directed from the first network process (101) to the second network process (102), is processed by being produced as a specific element of a queue (201),
wherein the queue (201), comprising a plurality of elements, is handled using at least one queue database,
wherein the plurality of elements of the queue (201) are able to be produced by producer network processes and are able to be
-- read or
-- read and consumed
by at least a first consumer network process and a second consumer network process, the producer network processes and the first and second consumer network processes being associated, respectively, to elements of the queue (201),
wherein a first private read indicator (211) is assigned to the first consumer network process, and the first private read indicator (211) corresponds to a position in the queue (201) such that all queue elements before it have been read by the first consumer network process, wherein the first private read indicator (211) is modified upon a reading operation of the first consumer network process, wherein a second private read indicator (221) is assigned to the second consumer network process, and the second private read indicator (221) corresponds to a position in the queue (201) such that all queue elements before it have been read by the second consumer network process, wherein the second private read indicator (221) is modified upon a reading operation of the second consumer network process,
wherein a global read indicator (231) is assigned to the first and second consumer network processes, and the global read indicator (231) corresponds to a position in the queue (201) such that all queue elements before it have been read by both the first and second consumer network process, wherein the global read indicator (231) is modified upon a reading operation of the first and second consumer network processes,
wherein a first private consume indicator (212) is assigned to the first consumer network process, and the first private consume indicator (212) corresponds to a position in the queue (201) such that all queue elements before it have been consumed by the first consumer network process, wherein the first private consume indicator (212) is modified upon a consuming operation of the first consumer network process,
wherein a second private consume indicator (222) is assigned to the second consumer network process, and the second private consume indicator (222) corresponds to a position in the queue (201) such that all queue elements before it have been consumed by the second consumer network process, wherein the second private consume indicator (222) is modified upon a consuming operation of the second consumer network process,
wherein a global consume indicator (232) is assigned to the first and second consumer network processes, and the global consume indicator (232) corresponds to a position in the queue (201) such that all queue elements before it have been consumed by both the first and second consumer network process, wherein the global consume indicator (232) is modified upon a consuming operation of the first and second consumer network processes,
wherein the message or the request of the specific kind corresponds to an application such that different elements of the queue (201) that
-- belong to the queue (201)
-- but correspond to the same application
are processed separately from other elements of the queue (201) that correspond to a different application, wherein each application is related to by means of an application identity and a different set of private and global read indicators and private and global consume indicators is maintained for each application identity, wherein the second network process (102) corresponds to the first consumer network process of the specific element of the queue (201), corresponding to the message or the request of the specific kind, and wherein a third network process (103) corresponds to the second consumer network process of the specific element of the queue (201), corresponding to the message or the request of the specific kind,
wherein the method comprises the steps of:
-- in a first step, the second network process (102) reads the specific element of the queue (201), and the corresponding first private read indicator (211) is modified accordingly,
-- in a second step, the third network process (103) reads the specific element of the queue (201), and the corresponding second private read indicator (221) is modified accordingly,
-- in a third step, subsequent to both the first and second step, the corresponding global read indicator (231) is modified accordingly,
-- in a fourth step, subsequent to the first step, the second network process (102) consumes the specific element of the queue (201), and the corresponding first private consume indicator (212) is modified accordingly,
-- in a fifth step, subsequent to the second step, the third network process (103) consumes the specific element of the queue (201), and the corresponding second private consume indicator (222) is modified accordingly,
-- in a sixth step, subsequent to both the fourth and fifth step, the corresponding global consume indicator (232) is modified accordingly such that the specific element of the queue (201) is deleted from the queue (201).

2. Method according to claim 1, wherein - besides the message or the request of the specific kind, being directed from the first network process (101) to the second network process (102) - a message or a request of a further specific kind, being directed from the second network process (102) to the first network process (101), is processed by being produced as a further specific element of a further queue (202), the first network process (101) corresponding to the first consumer network process of the further specific element of the further queue (202), and a fourth network process (104) corresponding to the second consumer network process of the further specific element of the further queue (202),
wherein in the sixth step, the specific element of the queue (201) is deleted from the queue (201) only in case that the further specific element of the further queue (202) is produced.

3. Method according to one of the preceding claims, wherein one of the elements of the queue (201) is read or read and consumed
-- either by a plurality of consumer network processes of a first group of consumer network processes - first shard of consumer network processes,
-- or by a plurality of consumer network processes of a second group of consumer network processes - second shard of consumer network processes.

4. Method according to one of the preceding claims, wherein a priority indicator is assigned to the elements of the queue (201), the priority indicator being able to correspond to a number of different values, wherein the elements of the queue (201) having the same value of the priority indicator are processed separately from other elements of the queue (201) having a different value of the priority indicator.

5. Method according to one of the preceding claims, wherein the queue database of the queue (201) is a local database.

6. Method according to one of the preceding claims, wherein the queue database of the queue (201) is a distributed database.

7. System for enhancing the reliability of a telecommunications network (100), the telecommunications network (100) comprising a plurality of network nodes (110, 111) running at least a first network process (101) and a second network process (102), wherein the system is configured such that a message or a request of a specific kind, being directed from the first network process (101) to the second network process (102), is processed by being produced as a specific element of a queue (201),
wherein the system is configured such that the queue (201), comprising a plurality of elements, is handled using at least one queue database,
wherein the system is configured such that the plurality of elements of the queue (201) are able to be produced by producer network processes and are able to be
-- read or
-- read and consumed
by at least a first consumer network process and a second consumer network process, the producer network processes and the first and second consumer network processes being associated, respectively, to elements of the queue (201),
wherein the system is configured such that a first private read indicator (211) is assigned to the first consumer network process, and the first private read indicator (211) corresponds to a position in the queue (201) such that all queue elements before it have been read by the first consumer network process, wherein the first private read indicator (211) is modified upon a reading operation of the first consumer network process,
wherein the system is configured such that a second private read indicator (221) is assigned to the second consumer network process, and the second private read indicator (221) corresponds to a position in the queue (201) such that all queue elements before it have been read by the second consumer network process, wherein the second private read indicator (221) is modified upon a reading operation of the second consumer network process,
wherein the system is configured such that a global read indicator (231) is assigned to the first and second consumer network processes, and the global read indicator (231) corresponds to a position in the queue (201) such that all queue elements before it have been read by both the first and second consumer network process, wherein the global read indicator (231) is modified upon a reading operation of the first and second consumer network processes,
wherein the system is configured such that a first private consume indicator (212) is assigned to the first consumer network process, and the first private consume indicator (212) corresponds to a position in the queue (201) such that all queue elements before it have been consumed by the first consumer network process, wherein the first private consume indicator (212) is modified upon a consuming operation of the first consumer network process,
wherein the system is configured such that a second private consume indicator (222) is assigned to the second consumer network process, and the second private consume indicator (222) corresponds to a position in the queue (201) such that all queue elements before it have been consumed by the second consumer network process, wherein the second private consume indicator (222) is modified upon a consuming operation of the second consumer network process,
wherein the system is configured such that a global consume indicator (232) is assigned to the first and second consumer network processes, and the global consume indicator (232) corresponds to a position in the queue (201) such that all queue elements before it have been consumed by both the first and second consumer network process, wherein the global consume indicator (232) is modified upon a consuming operation of the first and second consumer network processes,
wherein the system is configured such that the message or the request of the specific kind corresponds to an application such that different elements of the queue (201) that
-- belong to the queue (201)
-- but correspond to the same application
are processed separately from other elements of the queue (201) that correspond to a different application, wherein each application is related to by means of an application identity and a different set of private and global read indicators and private and global consume indicators is maintained for each application identity, wherein the second network process (102) corresponds to the first consumer network process of the specific element of the queue (201), corresponding to the message or the request of the specific kind, and wherein a third network process (103) corresponds to the second consumer network process of the specific element of the queue (201), corresponding to the message or the request of the specific kind,
wherein the system is configured such that:
-- the second network process (102) reads the specific element of the queue (201), and the corresponding first private read indicator (211) is modified accordingly,
-- the third network process (103) reads the specific element of the queue (201), and the corresponding second private read indicator (221) is modified accordingly,
-- the corresponding global read indicator (231) is modified accordingly,
-- the second network process (102) consumes the specific element of the queue (201), and the corresponding first private consume indicator (212) is modified accordingly,
-- the third network process (103) consumes the specific element of the queue (201), and the corresponding second private consume indicator (222) is modified accordingly,
-- the corresponding global consume indicator (232) is modified accordingly such that the specific element of the queue (201) is deleted from the queue (201).

8. System according to claim 7, wherein the system is configured such that - besides the message or the request of the specific kind, being directed from the first network process (101) to the second network process (102) - a message or a request of a further specific kind, being directed from the second network process (102) to the first network process (101), is processed by being produced as a further specific element of a further queue (202), the first network process (101) corresponding to the first consumer network process of the further specific element of the further queue (202), and a fourth network process (104) corresponding to the second consumer network process of the further specific element of the further queue (202),
wherein the system is configured such that the specific element of the queue (201) is deleted from the queue (201) only in case that the further specific element of the further queue (202) is produced.

9. System according to one of claims 7 or 8, wherein the queue database of the queue (201) is a local database.

10. System according to one of claims 7 or 8, wherein the queue database of the queue (201) is a distributed database.

11. Telecommunications network (100) with enhanced reliability, the telecommunications network (100) comprising a plurality of network nodes (110, 111) running at least a first network process (101) and a second network process (102), wherein the telecommunications network is configured such that a message or a request of a specific kind, being directed from the first network process (101) to the second network process (102), is processed by being produced as a specific element of a queue (201),
wherein the telecommunications network is configured such that the queue (201), comprising a plurality of elements, is handled using at least one queue database, wherein the telecommunications network is configured such that the plurality of elements of the queue (201) are able to be produced by producer network processes and are able to be
-- read or
-- read and consumed
by at least a first consumer network process and a second consumer network process, the producer network processes and the first and second consumer network processes being associated, respectively, to elements of the queue (201),
wherein the telecommunications network is configured such that a first private read indicator (211) is assigned to the first consumer network process, and the first private read indicator (211) corresponds to a position in the queue (201) such that all queue elements before it have been read by the first consumer network process, wherein the first private read indicator (211) is modified upon a reading operation of the first consumer network process,
wherein the telecommunications network is configured such that a second private read indicator (221) is assigned to the second consumer network process, and the second private read indicator (221) corresponds to a position in the queue (201) such that all queue elements before it have been read by the second consumer network process, wherein the second private read indicator (221) is modified upon a reading operation of the second consumer network process,
wherein the telecommunications network is configured such that a global read indicator (231) is assigned to the first and second consumer network processes, and the global read indicator (231) corresponds to a position in the queue (201) such that all queue elements before it have been read by both the first and second consumer network process, wherein the global read indicator (231) is modified upon a reading operation of the first and second consumer network processes,
wherein the telecommunications network is configured such that a first private consume indicator (212) is assigned to the first consumer network process, and the first private consume indicator (212) corresponds to a position in the queue (201) such that all queue elements before it have been consumed by the first consumer network process, wherein the first private consume indicator (212) is modified upon a consuming operation of the first consumer network process, wherein the telecommunications network is configured such that a second private consume indicator (222) is assigned to the second consumer network process, and the second private consume indicator (222) corresponds to a position in the queue (201) such that all queue elements before it have been consumed by the second consumer network process, wherein the second private consume indicator (222) is modified upon a consuming operation of the second consumer network process,
wherein the telecommunications network is configured such that a global consume indicator (232) is assigned to the first and second consumer network processes, and the global consume indicator (232) corresponds to a position in the queue (201) such that all queue elements before it have been consumed by both the first and second consumer network process, wherein the global consume indicator (232) is modified upon a consuming operation of the first and second consumer network processes,
wherein the telecommunications network is configured such that the message or the request of the specific kind corresponds to an application such that different elements of the queue (201) that
-- belong to the queue (201)
-- but correspond to the same application
are processed separately from other elements of the queue (201) that correspond to a different application, wherein each application is related to by means of an application identity and a different set of private and global read indicators and private and global consume indicators is maintained for each application identity, wherein the second network process (102) corresponds to the first consumer network process of the specific element of the queue (201), corresponding to the message or the request of the specific kind, and wherein a third network process (103) corresponds to the second consumer network process of the specific element of the queue (201), corresponding to the message or the request of the specific kind,
wherein the telecommunications network is configured such that:
-- the second network process (102) reads the specific element of the queue (201), and the corresponding first private read indicator (211) is modified accordingly,
-- the third network process (103) reads the specific element of the queue (201), and the corresponding second private read indicator (221) is modified accordingly,
-- the corresponding global read indicator (231) is modified accordingly,
-- the second network process (102) consumes the specific element of the queue (201), and the corresponding first private consume indicator (212) is modified accordingly,
-- the third network process (103) consumes the specific element of the queue (201), and the corresponding second private consume indicator (222) is modified accordingly,
-- the corresponding global consume indicator (232) is modified accordingly such that the specific element of the queue (201) is deleted from the queue (201).

12. Program comprising a computer readable program code which, when executed on a computer in communication with a telecommunication network (100) or on a network node of a telecommunications network (100) or on a plurality of network nodes of a telecommunications network (100), the telecommunications network (100) comprising a plurality of network nodes (110, 111) running at least a first network process (101) and a second network process (102), causes the computer or the network node of the telecommunications network (100) and/or the plurality of network nodes of the telecommunications network (100) to perform a method according to one of claims 1 to 6.

13. Computer program product for using a telecommunications network (100), the computer program product comprising the computer program of claim 12 stored on a storage medium.

## Patentansprüche

1. Verfahren zum Erhöhen der Zuverlässigkeit eines Telekommunikationsnetzes (100), wobei das Telekommunikationsnetz (100) mehrere Netzknoten (110, 111) umfasst, auf denen mindestens ein erster Netzprozess (101) und ein zweiter Netzprozess (102) ablaufen, wobei eine Nachricht oder eine Anforderung einer spezifischen Art, die von dem ersten Netzprozess (101) an den zweiten Netzprozess (102) übermittelt wird, verarbeitet wird, indem sie als ein spezifisches Element einer Warteschlange (201) erzeugt wird,
wobei die Warteschlange (201), die mehrere Elemente umfasst, unter Verwendung mindestens einer Warteschlangendatenbank gehandhabt wird,
wobei die mehreren Elemente der Warteschlange (201) durch Erzeugernetzprozesse erzeugt werden können und durch mindestens einen ersten Verbrauchernetzprozess und einen zweiten Verbrauchernetzprozess
- gelesen oder
- gelesen und verbraucht
werden können, wobei die Erzeugernetzprozesse und der erste und der zweite Verbrauchernetzprozess jeweils Elementen der Warteschlange (201) zugeordnet sind,
wobei ein erster privater Leseindikator (211) dem ersten Verbrauchernetzprozess zugewiesen wird und der erste private Leseindikator (211) einer solchen Position in der Warteschlange (201) entspricht, dass alle Warteschlangenelemente vor ihm durch den ersten Verbrauchernetzprozess gelesen wurden, wobei der erste private Leseindikator (211) bei einem Lesevorgang des ersten Verbrauchernetzprozesses modifiziert wird, wobei ein zweiter privater Leseindikator (221) dem zweiten Verbrauchernetzprozess zugewiesen wird und der zweite private Leseindikator (221) einer solchen Position in der Warteschlange (201) entspricht, dass alle Warteschlangenelemente vor ihm durch den zweiten Verbrauchernetzprozess gelesen wurden, wobei der zweite private Leseindikator (221) bei einem Lesevorgang des zweiten Verbrauchernetzprozesses modifiziert wird,
wobei ein globaler Leseindikator (231) dem ersten und dem zweiten Verbrauchernetzprozess zugewiesen wird und der globale Leseindikator (231) einer solchen Position in der Warteschlange (201) entspricht, dass alle Warteschlangenelemente vor ihm sowohl durch den ersten als auch den zweiten Verbrauchernetzprozess gelesen wurden, wobei der globale Leseindikator (231) bei einem Lesevorgang des ersten und des zweiten Verbrauchernetzprozesses modifiziert wird,
wobei ein erster privater Verbrauchsindikator (212) dem ersten Verbrauchernetzprozess zugewiesen wird und der erste private Verbrauchsindikator (212) einer solchen Position in der Warteschlange (201) entspricht, dass alle Warteschlangenelemente vor ihm durch den ersten Verbrauchernetzprozess verbraucht worden sind, wobei der erste private Verbrauchsindikator (212) bei einem Verbrauchsvorgang des ersten Verbrauchernetzprozesses modifiziert wird,
wobei ein zweiter privater Verbrauchsindikator (222) dem zweiten Verbrauchernetzprozess zugewiesen wird und der zweite private Verbrauchsindikator (222) einer solchen Position in der Warteschlange (201) entspricht, dass alle Warteschlangenelemente vor ihm durch den zweiten Verbrauchernetzprozess verbraucht worden sind, wobei der zweite private Verbrauchsindikator (222) bei einem Verbrauchsvorgang des zweiten Verbrauchernetzprozesses modifiziert wird,
wobei ein globaler Verbrauchsindikator (232) dem ersten und dem zweiten Verbrauchernetzprozess zugewiesen wird und der globale Verbrauchsindikator (232) einer solchen Position in der Warteschlange (201) entspricht, dass alle Warteschlangenelemente vor ihm sowohl durch den ersten als auch den zweiten Verbrauchernetzprozess verbraucht worden sind, wobei der globale Verbrauchsindikator (232) bei einem Verbrauchsvorgang des ersten und des zweiten Verbrauchernetzprozesses modifiziert wird,
wobei die Nachricht oder die Anforderung der spezifischen Art einer Anwendung dergestalt entspricht, dass verschiedene Elemente der Warteschlange (201), die
- zu der Warteschlange (201) gehören,
- aber derselben Anwendung entsprechen,
getrennt von anderen Elementen der Warteschlange (201), die einer anderen Anwendung entsprechen, verarbeitet werden, wobei auf jede Anwendung mittels einer Anwendungsidentität Bezug genommen wird und für jede Anwendungsidentität ein anderer Satz privater und globaler Leseindikatoren und privater und globaler Verbrauchsindikatoren geführt wird, wobei der zweite Netzprozess (102) dem ersten Verbrauchernetzprozess des spezifischen Elements der Warteschlange (201) entspricht, welcher der Nachricht oder der Anforderung der spezifischen Art entspricht, und wobei ein dritter Netzprozess (103) dem zweiten Verbrauchernetzprozess des spezifischen Elements der Warteschlange (201) entspricht, welcher der Nachricht oder der Anforderung der spezifischen Art entspricht,
wobei das Verfahren die folgenden Schritte umfasst:
- in einem ersten Schritt liest der zweite Netzprozess (102) das spezifische Element der Warteschlange (201) und der entsprechende erste private Leseindikator (211) wird entsprechend modifiziert,
- in einem zweiten Schritt liest der dritte Netzprozess (103) das spezifische Element der Warteschlange (201) und der entsprechende zweite private Leseindikator (221) wird entsprechend modifiziert,
- in einem dritten Schritt, im Anschluss sowohl an den ersten als auch an den zweiten Schritt, wird der entsprechende globale Leseindikator (231) entsprechend modifiziert,
- in einem vierten Schritt, im Anschluss an den ersten Schritt, verbraucht der zweite Netzprozess (102) das spezifische Element der Warteschlange (201) und der entsprechende erste private Verbrauchsindikator (212) wird entsprechend modifiziert,
- in einem fünften Schritt, im Anschluss an den zweiten Schritt, verbraucht der dritte Netzprozess (103) das spezifische Element der Warteschlange (201) und der entsprechende zweite private Verbrauchsindikator (222) wird entsprechend modifiziert,
- in einem sechsten Schritt, im Anschluss an den vierten als auch an den fünften Schritt, wird der entsprechende globale Verbrauchsindikator (232) entsprechend so modifiziert, dass das spezifische Element der Warteschlange (201) aus der Warteschlange (201) gelöscht wird.

2. Verfahren nach Anspruch 1, wobei - neben der von dem ersten Netzprozess (101) an den zweiten Netzprozess (102) übermittelten Nachricht oder Anforderung der spezifischen Art - eine von dem zweiten Netzprozess (102) an den ersten Netzprozess (101) übermittelte Nachricht oder Anforderung einer weiteren spezifischen Art verarbeitet wird, indem sie als ein weiteres spezifisches Element einer weiteren Warteschlange (202) erzeugt wird, wobei der erste Netzprozess (101) dem ersten Verbrauchernetzprozess des weiteren spezifischen Elements der weiteren Warteschlange (202) entspricht und ein vierter Netzprozess (104) dem zweiten Verbrauchernetzprozess des weiteren spezifischen Elements der weiteren Warteschlange (202) entspricht, wobei in dem sechsten Schritt das spezifische Element der Warteschlange (201) nur für den Fall aus der Warteschlange (201) gelöscht wird, dass das weitere spezifische Element der weiteren Warteschlange (202) erzeugt wird.

3. Verfahren nach einem der vorangehenden Ansprüche, wobei eines der Elemente der Warteschlange (201) gelesen oder gelesen und verbraucht wird:
- entweder durch mehrere Verbrauchernetzprozesse einer ersten Gruppe von Verbrauchernetzprozessen - erster Anteil von Verbrauchernetzprozessen
- oder durch mehrere Verbrauchernetzprozesse einer zweiten Gruppe von Verbrauchernetzprozessen - zweiter Anteil von Verbrauchernetzprozessen.

4. Verfahren nach einem der vorangehenden Ansprüche, wobei den Elementen der Warteschlange (201) ein Prioritätsindikator zugewiesen wird, wobei der Prioritätsindikator einer Anzahl verschiedener Werte entsprechen kann, wobei die Elemente der Warteschlange (201), die denselben Wert des Prioritätsindikators haben, getrennt von anderen Elementen der Warteschlange (201), die einen anderen Wert des Prioritätsindikators haben, verarbeitet werden.

5. Verfahren nach einem der vorangehenden Ansprüche, wobei die Warteschlangen-Datenbank der Warteschlange (201) eine lokale Datenbank ist.

6. Verfahren nach einem der vorangehenden Ansprüche, wobei die Warteschlangen-Datenbank der Warteschlange (201) eine dezentralisierte Datenbank ist.

7. System zum Erhöhen der Zuverlässigkeit eines Telekommunikationsnetzes (100), wobei das Telekommunikationsnetz (100) mehrere Netzknoten (110, 111) umfasst, auf denen mindestens ein erster Netzprozess (101) und ein zweiter Netzprozess (102) ablaufen, wobei das System so konfiguriert ist, dass eine Nachricht oder eine Anforderung einer spezifischen Art, die von dem ersten Netzprozess (101) an den zweiten Netzprozess (102) übermittelt wird, verarbeitet wird, indem sie als ein spezifisches Element einer Warteschlange (201) erzeugt wird,
wobei das System so konfiguriert ist, dass die Warteschlange (201), die mehrere Elementen umfasst, unter Verwendung mindestens einer Warteschlangendatenbank gehandhabt wird,
wobei das System so konfiguriert ist, dass die mehreren Elemente der Warteschlange (201) durch Erzeugernetzprozesse erzeugt werden können und durch mindestens einen ersten Verbrauchernetzprozess und einen zweiten Verbrauchernetzprozess
- gelesen oder
- gelesen und verbraucht
werden können, wobei die Erzeugernetzprozesse und der erste und der zweite Verbrauchernetzprozess jeweils Elementen der Warteschlange (201) zugeordnet sind,
wobei das System so konfiguriert ist, dass ein erster privater Leseindikator (211) dem ersten Verbrauchernetzprozess zugewiesen wird, und der erste private Leseindikator (211) einer solchen Position in der Warteschlange (201) entspricht, dass alle Warteschlangenelemente vor ihm durch den ersten Verbrauchernetzprozess gelesen wurden, wobei der erste private Leseindikator (211) bei einem Lesevorgang des ersten Verbrauchernetzprozesses modifiziert wird,
wobei das System so konfiguriert ist, dass ein zweiter privater Leseindikator (221) dem zweiten Verbrauchernetzprozess zugewiesen wird, und der zweite private Leseindikator (221) einer solchen Position in der Warteschlange (201) entspricht, dass alle Warteschlangenelemente vor ihm durch den zweiten Verbrauchernetzprozess gelesen wurden, wobei der zweite private Leseindikator (221) bei einem Lesevorgang des zweiten Verbrauchernetzprozesses modifiziert wird,
wobei das System so konfiguriert ist, dass ein globaler Leseindikator (231) dem ersten und dem zweiten Verbrauchernetzprozess zugewiesen wird und der globale Leseindikator (231) einer solchen Position in der Warteschlange (201) entspricht, dass alle Warteschlangenelemente vor ihm sowohl durch den ersten als auch den zweiten Verbrauchernetzprozess gelesen wurden, wobei der globale Leseindikator (231) bei einem Lesevorgang des ersten und des zweiten Verbrauchernetzprozesses modifiziert wird,
wobei das System so konfiguriert ist, dass dem ersten Verbrauchernetzprozess ein erster privater Verbrauchsindikator (212) zugewiesen wird und der erste private Verbrauchsindikator (212) einer solchen Position in der Warteschlange (201) entspricht, dass alle Warteschlangenelemente vor ihm durch den ersten Verbrauchernetzprozess verbraucht worden sind, wobei der erste private Verbrauchsindikator (212) bei einem Verbrauchsvorgang des ersten Verbrauchernetzprozesses modifiziert wird,
wobei das System so konfiguriert ist, dass dem zweiten Verbrauchernetzprozess ein zweiter privater Verbrauchsindikator (222) zugewiesen wird, und der zweite private Verbrauchsindikator (222) einer solchen Position in der Warteschlange (201) entspricht, dass alle Warteschlangenelemente vor ihm durch den zweiten Verbrauchernetzprozess verbraucht worden sind, wobei der zweite private Verbrauchsindikator (222) bei einem Verbrauchsvorgang des zweiten Verbrauchernetzprozesses modifiziert wird,
wobei das System so konfiguriert ist, dass dem ersten und dem zweiten Verbrauchernetzprozess ein globaler Verbrauchsindikator (232) zugewiesen wird, und der globale Verbrauchsindikator (232) einer solchen Position in der Warteschlange (201) entspricht, dass alle Warteschlangenelemente davor sowohl durch den ersten als auch den zweiten Verbrauchernetzprozess verbraucht worden sind, wobei der globale Verbrauchsindikator (232) bei einem Verbrauchsvorgang des ersten und des zweiten Verbrauchernetzprozesses modifiziert wird,
wobei das System so konfiguriert ist, dass die Nachricht oder die Anforderung der spezifischen Art einer Anwendung dergestalt entspricht, dass verschiedene Elemente der Warteschlange (201), die
- zu der Warteschlange (201) gehören,
- aber derselben Anwendung entsprechen,
getrennt von anderen Elementen der Warteschlange (201), die einer anderen Anwendung entsprechen, verarbeitet werden, wobei auf jede Anwendung mittels einer Anwendungsidentität Bezug genommen wird und für jede Anwendungsidentität ein anderer Satz privater und globaler Leseindikatoren und privater und globaler Verbrauchsindikatoren geführt wird, wobei der zweite Netzprozess (102) dem ersten Verbrauchernetzprozess des spezifischen Elements der Warteschlange (201) entspricht, welcher der Nachricht oder der Anforderung der spezifischen Art entspricht, und wobei ein dritter Netzprozess (103) dem zweiten Verbrauchernetzprozess des spezifischen Elements der Warteschlange (201) entspricht, welcher der Nachricht oder der Anforderung der spezifischen Art entspricht,
wobei das System so konfiguriert ist, dass:
- der zweite Netzprozess (102) das spezifische Element der Warteschlange (201) liest und der entsprechende erste private Leseindikator (211) entsprechend modifiziert wird,
- der dritte Netzprozess (103) das spezifische Element der Warteschlange (201) liest und der entsprechende zweite private Leseindikator (221) entsprechend modifiziert wird,
- der entsprechende globale Leseindikator (231) entsprechend modifiziert wird,
- der zweite Netzprozess (102) das spezifische Element der Warteschlange (201) verbraucht und der entsprechende erste private Verbrauchsindikator (212) entsprechend modifiziert wird,
- der dritte Netzprozess (103) das spezifische Element der Warteschlange (201) verbraucht und der entsprechende zweite private Verbrauchsindikator (222) entsprechend modifiziert wird,
- der entsprechende globale Verbrauchsindikator (232) entsprechend so modifiziert wird, dass das spezifische Element der Warteschlange (201) aus der Warteschlange (201) gelöscht wird.

8. System nach Anspruch 7, wobei das System so konfiguriert ist, dass - neben der von dem ersten Netzprozess (101) an den zweiten Netzprozess (102) übermittelten Nachricht oder Anforderung der spezifischen Art - eine von dem zweiten Netzprozess (102) an den ersten Netzprozess (101) übermittelte Nachricht oder Anforderung einer weiteren spezifischen Art verarbeitet wird, indem sie als ein weiteres spezifisches Element einer weiteren Warteschlange (202) erzeugt wird, wobei der erste Netzprozess (101) dem ersten Verbrauchernetzprozess des weiteren spezifischen Elements der weiteren Warteschlange (202) entspricht, und ein vierter Netzprozess (104) dem zweiten Verbrauchernetzprozess des weiteren spezifischen Elements der weiteren Warteschlange (202) entspricht,
wobei das System so konfiguriert ist, dass das spezifische Element der Warteschlange (201) nur für den Fall aus der Warteschlange (201) gelöscht wird, dass das weitere spezifische Element der weiteren Warteschlange (202) erzeugt wird.

9. System nach einem der Ansprüche 7 und 8, wobei die Warteschlangen-Datenbank der Warteschlange (201) eine lokale Datenbank ist.

10. System nach einem der Ansprüche 7 und 8, wobei die Warteschlangen-Datenbank der Warteschlange (201) eine dezentralisierte Datenbank ist.

11. Telekommunikationsnetz (100) mit erhöhter Zuverlässigkeit, wobei das Telekommunikationsnetz (100) mehrere Netzknoten (110, 111) umfasst, auf denen mindestens ein erster Netzprozess (101) und ein zweiter Netzprozess (102) ablaufen, wobei das Telekommunikationsnetz so konfiguriert ist, dass eine Nachricht oder eine Anforderung einer spezifischen Art, die von dem ersten Netzprozess (101) an den zweiten Netzprozess (102) übermittelt wird, verarbeitet wird, indem sie als ein spezifisches Element einer Warteschlange (201) erzeugt wird,
wobei das Telekommunikationsnetz so konfiguriert ist, dass die Warteschlange (201), die mehrere Elemente umfasst, unter Verwendung mindestens einer Warteschlangendatenbank gehandhabt wird, wobei das Telekommunikationsnetz so konfiguriert ist, dass die mehreren Elemente der Warteschlange (201) durch Erzeugernetzprozesse erzeugt werden können und durch mindestens einen ersten Verbrauchernetzprozess und einen zweiten Verbrauchernetzprozess
- gelesen oder
- gelesen und verbraucht
werden können, wobei die Erzeugernetzprozesse und der erste und der zweite Verbrauchernetzprozess jeweils Elementen der Warteschlange (201) zugeordnet sind,
wobei das Telekommunikationsnetz so konfiguriert ist, dass ein erster privater Leseindikator (211) dem ersten Verbrauchernetzprozess zugewiesen wird, und der erste private Leseindikator (211) einer solchen Position in der Warteschlange (201) entspricht, dass alle Warteschlangenelemente vor ihm durch den ersten Verbrauchernetzprozess gelesen wurden, wobei der erste private Leseindikator (211) bei einem Lesevorgang des ersten Verbrauchernetzprozesses modifiziert wird,
wobei das Telekommunikationsnetz so konfiguriert ist, dass ein zweiter privater Leseindikator (221) dem zweiten Verbrauchernetzprozess zugewiesen wird, und der zweite private Leseindikator (221) einer solchen Position in der Warteschlange (201) entspricht, dass alle Warteschlangenelemente vor ihm durch den zweiten Verbrauchernetzprozess gelesen wurden, wobei der zweite private Leseindikator (221) bei einem Lesevorgang des zweiten Verbrauchernetzprozesses modifiziert wird,
wobei das Telekommunikationsnetz so konfiguriert ist, dass ein globaler Leseindikator (231) dem ersten und dem zweiten Verbrauchernetzprozess zugewiesen wird und der globale Leseindikator (231) einer solchen Position in der Warteschlange (201) entspricht, dass alle Warteschlangenelemente vor ihm sowohl durch den ersten als auch den zweiten Verbrauchernetzprozess gelesen wurden, wobei der globale Leseindikator (231) bei einem Lesevorgang des ersten und des zweiten Verbrauchernetzprozesses modifiziert wird,
wobei das Telekommunikationsnetz so konfiguriert ist, dass ein erster privater Verbrauchsindikator (212) dem ersten Verbrauchernetzprozess zugewiesen wird und der erste private Verbrauchsindikator (212) einer solchen Position in der Warteschlange (201) entspricht, dass alle Warteschlangenelemente vor ihm durch den ersten Verbrauchernetzprozess verbraucht worden sind, wobei der erste private Verbrauchsindikator (212) bei einem Verbrauchsvorgang des ersten Verbrauchernetzprozesses modifiziert wird,
wobei das Telekommunikationsnetz so konfiguriert ist, dass ein zweiter privater Verbrauchsindikator (222) dem zweiten Verbrauchernetzprozess zugewiesen wird, und der zweite private Verbrauchsindikator (222) einer solchen Position in der Warteschlange (201) entspricht, dass alle Warteschlangenelemente vor ihm durch den zweiten Verbrauchernetzprozess verbraucht worden sind, wobei der zweite private Verbrauchsindikator (222) bei einem Verbrauchsvorgang des zweiten Verbrauchernetzprozesses modifiziert wird,
wobei das Telekommunikationsnetz so konfiguriert ist, dass ein globaler Verbrauchsindikator (232) dem ersten und dem zweiten Verbrauchernetzprozess zugewiesen wird, und der globale Verbrauchsindikator (232) einer solchen Position in der Warteschlange (201) entspricht, dass alle Warteschlangenelemente davor sowohl durch den ersten als auch den zweiten Verbrauchernetzprozess verbraucht worden sind, wobei der globale Verbrauchsindikator (232) bei einem Verbrauchsvorgang des ersten und des zweiten Verbrauchernetzprozesses modifiziert wird,
wobei das Telekommunikationsnetz so konfiguriert ist, dass die Nachricht oder die Anforderung der spezifischen Art einer Anwendung dergestalt entspricht, dass verschiedene Elemente der Warteschlange (201), die
- zu der Warteschlange (201) gehören,
- aber derselben Anwendung entsprechen,
getrennt von anderen Elementen der Warteschlange (201), die einer anderen Anwendung entsprechen, verarbeitet werden, wobei auf jede Anwendung mittels einer Anwendungsidentität Bezug genommen wird und für jede Anwendungsidentität ein anderer Satz privater und globaler Leseindikatoren und privater und globaler Verbrauchsindikatoren geführt wird, wobei der zweite Netzprozess (102) dem ersten Verbrauchernetzprozess des spezifischen Elements der Warteschlange (201) entspricht, welcher der Nachricht oder der Anforderung der spezifischen Art entspricht, und wobei ein dritter Netzprozess (103) dem zweiten Verbrauchernetzprozess des spezifischen Elements der Warteschlange (201) entspricht, welcher der Nachricht oder der Anforderung der spezifischen Art entspricht,
wobei das Telekommunikationsnetz so konfiguriert ist, dass:
- der zweite Netzprozess (102) das spezifische Element der Warteschlange (201) liest und der entsprechende erste private Leseindikator (211) entsprechend modifiziert wird,
- der dritte Netzprozess (103) das spezifische Element der Warteschlange (201) liest und der entsprechende zweite private Leseindikator (221) entsprechend modifiziert wird,
- der entsprechende globale Leseindikator (231) entsprechend modifiziert wird,
- der zweite Netzprozess (102) das spezifische Element der Warteschlange (201) verbraucht und der entsprechende erste private Verbrauchsindikator (212) entsprechend modifiziert wird,
- der dritte Netzprozess (103) das spezifische Element der Warteschlange (201) verbraucht und der entsprechende zweite private Verbrauchsindikator (222) entsprechend modifiziert wird,
- der entsprechende globale Verbrauchsindikator (232) entsprechend so modifiziert wird, dass das spezifische Element der Warteschlange (201) aus der Warteschlange (201) gelöscht wird.

12. Programm, umfassend einen computerlesbaren Programmcode, der, wenn er auf einem Computer, der mit einem Telekommunikationsnetz (100) kommuniziert, oder in einem Netzknoten eines Telekommunikationsnetzes (100) oder in mehreren Netzknoten eines Telekommunikationsnetzes (100) ausgeführt wird, wobei das Telekommunikationsnetz (100) mehrere Netzknoten (110, 111) umfasst, auf denen mindestens ein erster Netzprozess (101) und ein zweiter Netzprozess (102) abläuft, den Computer oder den Netzknoten des Telekommunikationsnetzes (100) und/oder die mehreren Netzknoten des Telekommunikationsnetzes (100) veranlasst, ein Verfahren nach einem der Ansprüche 1 bis 6 durchzuführen.

13. Computerprogrammprodukt zum Verwenden eines Telekommunikationsnetzes (100), wobei das Computerprogrammprodukt das Computerprogramm nach Anspruch 12, das auf einem Speichermedium gespeichert ist, umfasst.

## Revendications

1. Procédé permettant d'améliorer la fiabilité d'un réseau de télécommunications (100), le réseau de télécommunications (100) comprenant une pluralité de nœuds de réseau (110, 111) exécutant au moins un premier processus de réseau (101) et un deuxième processus de réseau (102), dans lequel un message ou une demande d'un type spécifique, dirigé(e) du premier processus de réseau (101) au deuxième processus de réseau (102), est traité(e) en étant produit(e) sous la forme d'un élément spécifique d'une file d'attente (201),
dans lequel la file d'attente (201), comprenant une pluralité d'éléments, est gérée à l'aide d'au moins une base de données de file d'attente,
dans lequel la pluralité d'éléments de la file d'attente (201) peut être produite par des processus producteurs de réseau et peut être
- lue ou
- lue et consommée
par au moins un premier processus consommateur de réseau et un second processus consommateur de réseau, les processus producteurs de réseau et les premier et second processus consommateurs de réseau étant associés, respectivement, à des éléments de la file d'attente (201), dans lequel un premier indicateur privé de lecture (211) est attribué au premier processus consommateur de réseau, et le premier indicateur privé de lecture (211) correspond à une position dans la file d'attente (201) telle que tous les éléments de file d'attente avant qu'ils aient été lus par le premier processus consommateur de réseau, dans lequel le premier indicateur privé de lecture (211) est modifié lors d'une opération de lecture du premier processus consommateur de réseau,
dans lequel un second indicateur privé de lecture (221) est attribué au second processus consommateur de réseau, et le second indicateur privé de lecture (221) correspond à une position dans la file d'attente (201) telle que tous les éléments de file d'attente avant qu'ils aient été lus par le second processus consommateur de réseau, dans lequel le second indicateur privé de lecture (221) est modifié lors d'une opération de lecture du second processus consommateur de réseau,
dans lequel un indicateur global de lecture (231) est attribué aux premier et second processus consommateurs de réseau, et l'indicateur global de lecture (231) correspond à une position dans la file d'attente (201) telle que tous les éléments de file d'attente avant qu'ils aient été lus à la fois par le premier et le second processus consommateur de réseau, dans lequel l'indicateur global de lecture (231) est modifié lors d'une opération de lecture des premier et second processus consommateurs de réseau,
dans lequel un premier indicateur privé de consommation (212) est attribué au premier processus consommateur de réseau, et le premier indicateur privé de consommation (212) correspond à une position dans la file d'attente (201) telle que tous les éléments de file d'attente avant qu'ils aient été consommés par le premier processus consommateur de réseau, dans lequel le premier indicateur privé de consommation (212) est modifié lors d'une opération de consommation du premier processus consommateur de réseau,
dans lequel un second indicateur privé de consommation (222) est attribué au second processus consommateur de réseau, et le second indicateur privé de consommation (222) correspond à une position dans la file d'attente (201) telle que tous les éléments de file d'attente avant qu'ils aient été consommés par le second processus consommateur de réseau, dans lequel le second indicateur privé de consommation (222) est modifié lors d'une opération de consommation du second processus consommateur de réseau,
dans lequel un indicateur global de consommation (232) est attribué aux premier et second processus consommateurs de réseau, et l'indicateur global de consommation (232) correspond à une position dans la file d'attente (201) telle que tous les éléments de file d'attente avant qu'ils aient été consommés à la fois par le premier et le second processus consommateur de réseau, dans lequel l'indicateur global de consommation (232) est modifié lors d'une opération de consommation des premier et second processus consommateurs de réseau,
dans lequel le message ou la demande du type spécifique correspond à une application, de telle sorte que différents éléments de la file d'attente (201) qui
- appartiennent à la file d'attente (201),
- mais correspondent à la même application
soient traités séparément d'autres éléments de la file d'attente (201) qui correspondent à une application différente, dans lequel chaque application est liée à et au moyen d'une identité d'application et un ensemble différent d'indicateurs privés et globaux de lecture et d'indicateurs privés et globaux de consommation est tenu à jour pour chaque identité d'application,
dans lequel le deuxième processus de réseau (102) correspond au premier processus consommateur de réseau de l'élément spécifique de la file d'attente (201) correspondant au message ou à la demande du type spécifique, et dans lequel un troisième processus de réseau (103) correspond au second processus consommateur de réseau de l'élément spécifique de la file d'attente (201) correspondant au message ou à la demande du type spécifique,
dans lequel le procédé comprend les étapes suivantes :
- dans une première étape, le deuxième processus de réseau (102) lit l'élément spécifique de la file d'attente (201), et le premier indicateur privé de lecture (211) correspondant est modifié en conséquence,
- dans une deuxième étape, le troisième processus de réseau (103) lit l'élément spécifique de la file d'attente (201), et le second indicateur privé de lecture (221) correspondant est modifié en conséquence,
- dans une troisième étape, faisant suite à la fois à la première et à la deuxième étape, l'indicateur global de lecture (231) correspondant est modifié en conséquence,
- dans une quatrième étape, faisant suite à la première étape, le deuxième processus de réseau (102) consomme l'élément spécifique de la file d'attente (201), et le premier indicateur privé de consommation (212) correspondant est modifié en conséquence,
- dans une cinquième étape, faisant suite à la deuxième étape, le troisième processus de réseau (103) consomme l'élément spécifique de la file d'attente (201), et le second indicateur privé de consommation (222) correspondant est modifié en conséquence,
- dans une sixième étape, faisant suite à la fois à la quatrième et à la cinquième étape, l'indicateur global de consommation (232) correspondant est modifié en conséquence, de manière que l'élément spécifique de la file d'attente (201) soit supprimé de la file d'attente (201) .

2. Procédé selon la revendication 1, dans lequel - outre le message ou la demande du type spécifique, dirigé(e) du premier processus de réseau (101) au deuxième processus de réseau (102) - un message ou une demande d'un autre type spécifique, dirigé(e) du deuxième processus de réseau (102) au premier processus de réseau (101), est traité(e) en étant produit(e) sous la forme d'un élément spécifique supplémentaire d'une file d'attente supplémentaire (202), le premier processus de réseau (101) correspondant au premier processus consommateur de réseau de l'élément spécifique supplémentaire de la file d'attente supplémentaire (202), et un quatrième processus de réseau (104) correspondant au second processus consommateur de réseau de l'élément spécifique supplémentaire de la file d'attente supplémentaire (202), dans lequel, dans la sixième étape, l'élément spécifique de la file d'attente (201) n'est supprimé de la file d'attente (201) que dans le cas où l'élément spécifique supplémentaire de la file d'attente supplémentaire (202) est produit.

3. Procédé selon l'une des revendications précédentes, dans lequel l'un des éléments de la file d'attente (201) est lu ou lu et consommé :
- soit par une pluralité de processus consommateurs de réseau d'un premier groupe de processus consommateurs de réseau - première partition de processus consommateurs de réseau,
- soit par une pluralité de processus consommateurs de réseau d'un second groupe de processus consommateurs de réseau - seconde partition de processus consommateurs de réseau.

4. Procédé selon l'une des revendications précédentes, dans lequel un indicateur de priorité est attribué aux éléments de la file d'attente (201), l'indicateur de priorité pouvant correspondre à un certain nombre de valeurs différentes, dans lequel les éléments de la file d'attente (201) ayant la même valeur de l'indicateur de priorité sont traités séparément d'autres éléments de la file d'attente (201) ayant une valeur différente de l'indicateur de priorité.

5. Procédé selon l'une des revendications précédentes, dans lequel la base de données de file d'attente de la file d'attente (201) est une base de données locale.

6. Procédé selon l'une des revendications précédentes, dans lequel la base de données de file d'attente de la file d'attente (201) est une base de données répartie.

7. Système permettant d'améliorer la fiabilité d'un réseau de télécommunications (100), le réseau de télécommunications (100) comprenant une pluralité de nœuds de réseau (110, 111) exécutant au moins un premier processus de réseau (101) et un deuxième processus de réseau (102), dans lequel le système est configuré de manière qu'un message ou une demande d'un type spécifique, dirigé(e) du premier processus de réseau (101) au deuxième processus de réseau (102), soit traité(e) en étant produit(e) sous la forme d'un élément spécifique d'une file d'attente (201),
dans lequel le système est configuré de manière que la file d'attente (201), comprenant une pluralité d'éléments, soit gérée à l'aide d'au moins une base de données de file d'attente,
dans lequel le système est configuré de manière que la pluralité d'éléments de la file d'attente (201) puisse être produite par des processus producteurs de réseau et puisse être
- lue ou
- lue et consommée
par au moins un premier processus consommateur de réseau et un second processus consommateur de réseau, les processus producteurs de réseau et les premier et second processus consommateurs de réseau étant associés, respectivement, à des éléments de la file d'attente (201), dans lequel le système est configuré de manière qu'un premier indicateur privé de lecture (211) soit attribué au premier processus consommateur de réseau, et que le premier indicateur privé de lecture (211) corresponde à une position dans la file d'attente (201) telle que tous les éléments de file d'attente avant qu'ils aient été lus par le premier processus consommateur de réseau, dans lequel le premier indicateur privé de lecture (211) est modifié lors d'une opération de lecture du premier processus consommateur de réseau,
dans lequel le système est configuré de manière qu'un second indicateur privé de lecture (221) soit attribué au second processus consommateur de réseau, et que le second indicateur privé de lecture (221) corresponde à une position dans la file d'attente (201) telle que tous les éléments de file d'attente avant qu'ils aient été lus par le second processus consommateur de réseau, dans lequel le second indicateur privé de lecture (221) est modifié lors d'une opération de lecture du second processus consommateur de réseau,
dans lequel le système est configuré de manière qu'un indicateur global de lecture (231) soit attribué aux premier et second processus consommateurs de réseau, et que l'indicateur global de lecture (231) corresponde à une position dans la file d'attente (201) telle que tous les éléments de file d'attente avant qu'ils aient été lus à la fois par le premier et le second processus consommateur de réseau, dans lequel l'indicateur global de lecture (231) est modifié lors d'une opération de lecture des premier et second processus consommateurs de réseau,
dans lequel le système est configuré de manière qu'un premier indicateur privé de consommation (212) soit attribué au premier processus consommateur de réseau, et que le premier indicateur privé de consommation (212) corresponde à une position dans la file d'attente (201) telle que tous les éléments de file d'attente avant qu'ils aient été consommés par le premier processus consommateur de réseau, dans lequel le premier indicateur privé de consommation (212) est modifié lors d'une opération de consommation du premier processus consommateur de réseau, dans lequel le système est configuré de manière qu'un second indicateur privé de consommation (222) soit attribué au second processus consommateur de réseau, et que le second indicateur privé de consommation (222) corresponde à une position dans la file d'attente (201) telle que tous les éléments de file d'attente avant qu'ils aient été consommés par le second processus consommateur de réseau, dans lequel le second indicateur privé de consommation (222) est modifié lors d'une opération de consommation du second processus consommateur de réseau, dans lequel le système est configuré de manière qu'un indicateur global de consommation (232) soit attribué aux premier et second processus consommateurs de réseau, et que l'indicateur global de consommation (232) corresponde à une position dans la file d'attente (201) telle que tous les éléments de file d'attente avant qu'ils aient été consommés à la fois par le premier et le second processus consommateur de réseau, dans lequel l'indicateur global de consommation (232) est modifié lors d'une opération de consommation des premier et second processus consommateurs de réseau,
dans lequel le système est configuré de manière que le message ou la demande du type spécifique corresponde à une application, de telle sorte que différents éléments de la file d'attente (201) qui
- appartiennent à la file d'attente (201),
- mais correspondent à la même application
soient traités séparément d'autres éléments de la file d'attente (201) qui correspondent à une application différente, dans lequel chaque application est liée à et au moyen d'une identité d'application et un ensemble différent d'indicateurs privés et globaux de lecture et d'indicateurs privés et globaux de consommation est tenu à jour pour chaque identité d'application,
dans lequel le deuxième processus de réseau (102) correspond au premier processus consommateur de réseau de l'élément spécifique de la file d'attente (201) correspondant au message ou à la demande du type spécifique, et dans lequel un troisième processus de réseau (103) correspond au second processus consommateur de réseau de l'élément spécifique de la file d'attente (201) correspondant au message ou à la demande du type spécifique,
dans lequel le système est configuré de telle sorte que :
- le deuxième processus de réseau (102) lise l'élément spécifique de la file d'attente (201), et le premier indicateur privé de lecture (211) correspondant soit modifié en conséquence,
- le troisième processus de réseau (103) lise l'élément spécifique de la file d'attente (201), et le second indicateur privé de lecture (221) correspondant soit modifié en conséquence,
- l'indicateur global de lecture (231) correspondant soit modifié en conséquence,
- le deuxième processus de réseau (102) consomme l'élément spécifique de la file d'attente (201), et le premier indicateur privé de consommation (212) correspondant soit modifié en conséquence,
- le troisième processus de réseau (103) consomme l'élément spécifique de la file d'attente (201), et le second indicateur privé de consommation (222) correspondant soit modifié en conséquence,
- l'indicateur global de consommation (232) correspondant soit modifié en conséquence, de manière que l'élément spécifique de la file d'attente (201) soit supprimé de la file d'attente (201).

8. Système selon la revendication 7, dans lequel le système est configuré de telle sorte que - outre le message ou la demande du type spécifique, dirigé(e) du premier processus de réseau (101) au deuxième processus de réseau (102) - un message ou une demande d'un autre type spécifique, dirigé(e) du deuxième processus de réseau (102) au premier processus de réseau (101), soit traité(e) en étant produit(e) sous la forme d'un élément spécifique supplémentaire d'une file d'attente supplémentaire (202), le premier processus de réseau (101) correspondant au premier processus consommateur de réseau de l'élément spécifique supplémentaire de la file d'attente supplémentaire (202), et un quatrième processus de réseau (104) correspondant au second processus consommateur de réseau de l'élément spécifique supplémentaire de la file d'attente supplémentaire (202), dans lequel le système est configuré de manière que l'élément spécifique de la file d'attente (201) ne soit supprimé de la file d'attente (201) que dans le cas où l'élément spécifique supplémentaire de la file d'attente supplémentaire (202) est produit.

9. Système selon l'une des revendications 7 et 8, dans lequel la base de données de file d'attente de la file d'attente (201) est une base de données locale.

10. Système selon l'une des revendications 7 et 8, dans lequel la base de données de file d'attente de la file d'attente (201) est une base de données répartie.

11. Réseau de télécommunications (100) à fiabilité améliorée, le réseau de télécommunications (100) comprenant une pluralité de nœuds de réseau (110, 111) exécutant au moins un premier processus de réseau (101) et un deuxième processus de réseau (102), dans lequel le réseau de télécommunications est configuré de manière qu'un message ou une demande d'un type spécifique, dirigé(e) du premier processus de réseau (101) au deuxième processus de réseau (102), soit traité(e) en étant produit(e) sous la forme d'un élément spécifique d'une file d'attente (201), dans lequel le réseau de télécommunications est configuré de manière que la file d'attente (201), comprenant une pluralité d'éléments, soit gérée à l'aide d'au moins une base de données de file d'attente, dans lequel le réseau de télécommunications est configuré de manière que la pluralité d'éléments de la file d'attente (201) puisse être produite par des processus producteurs de réseau et puisse être
- lue ou
- lue et consommée
par au moins un premier processus consommateur de réseau et un second processus consommateur de réseau, les processus producteurs de réseau et les premier et second processus consommateurs de réseau étant associés, respectivement, à des éléments de la file d'attente (201), dans lequel le réseau de télécommunications est configuré de manière qu'un premier indicateur privé de lecture (211) soit attribué au premier processus consommateur de réseau, et que le premier indicateur privé de lecture (211) corresponde à une position dans la file d'attente (201) telle que tous les éléments de file d'attente avant qu'ils aient été lus par le premier processus consommateur de réseau, dans lequel le premier indicateur privé de lecture (211) est modifié lors d'une opération de lecture du premier processus consommateur de réseau,
dans lequel le réseau de télécommunications est configuré de manière qu'un second indicateur privé de lecture (221) soit attribué au second processus consommateur de réseau, et que le second indicateur privé de lecture (221) corresponde à une position dans la file d'attente (201) telle que tous les éléments de file d'attente avant qu'ils aient été lus par le second processus consommateur de réseau, dans lequel le second indicateur privé de lecture (221) est modifié lors d'une opération de lecture du second processus consommateur de réseau,
dans lequel le réseau de télécommunications est configuré de manière qu'un indicateur global de lecture (231) soit attribué aux premier et second processus consommateurs de réseau, et que l'indicateur global de lecture (231) corresponde à une position dans la file d'attente (201) telle que tous les éléments de file d'attente avant qu'ils aient été lus à la fois par le premier et le second processus consommateur de réseau, dans lequel l'indicateur global de lecture (231) est modifié lors d'une opération de lecture des premier et second processus consommateurs de réseau,
dans lequel le réseau de télécommunications est configuré de manière qu'un premier indicateur privé de consommation (212) soit attribué au premier processus consommateur de réseau, et que le premier indicateur privé de consommation (212) corresponde à une position dans la file d'attente (201) telle que tous les éléments de file d'attente avant qu'ils aient été consommés par le premier processus consommateur de réseau, dans lequel le premier indicateur privé de consommation (212) est modifié lors d'une opération de consommation du premier processus consommateur de réseau,
dans lequel le réseau de télécommunications est configuré de manière qu'un second indicateur privé de consommation (222) soit attribué au second processus consommateur de réseau, et que le second indicateur privé de consommation (222) corresponde à une position dans la file d'attente (201) telle que tous les éléments de file d'attente avant qu'ils aient été consommés par le second processus consommateur de réseau, dans lequel le second indicateur privé de consommation (222) est modifié lors d'une opération de consommation du second processus consommateur de réseau,
dans lequel le réseau de télécommunications est configuré de manière qu'un indicateur global de consommation (232) soit attribué aux premier et second processus consommateurs de réseau, et que l'indicateur global de consommation (232) corresponde à une position dans la file d'attente (201) telle que tous les éléments de file d'attente avant qu'ils aient été consommés à la fois par le premier et le second processus consommateur de réseau, dans lequel l'indicateur global de consommation (232) est modifié lors d'une opération de consommation des premier et second processus consommateurs de réseau,
dans lequel le réseau de télécommunications est configuré de manière que le message ou la demande du type spécifique corresponde à une application, de telle sorte que différents éléments de la file d'attente (201) qui
- appartiennent à la file d'attente (201),
- mais correspondent à la même application
soient traités séparément d'autres éléments de la file d'attente (201) qui correspondent à une application différente, dans lequel chaque application est liée à et au moyen d'une identité d'application et un ensemble différent d'indicateurs privés et globaux de lecture et d'indicateurs privés et globaux de consommation est tenu à jour pour chaque identité d'application,
dans lequel le deuxième processus de réseau (102) correspond au premier processus consommateur de réseau de l'élément spécifique de la file d'attente (201) correspondant au message ou à la demande du type spécifique, et dans lequel un troisième processus de réseau (103) correspond au second processus consommateur de réseau de l'élément spécifique de la file d'attente (201) correspondant au message ou à la demande du type spécifique,
dans lequel le réseau de télécommunications est configuré de telle sorte que :
- le deuxième processus de réseau (102) lise l'élément spécifique de la file d'attente (201), et le premier indicateur privé de lecture (211) correspondant soit modifié en conséquence,
- le troisième processus de réseau (103) lise l'élément spécifique de la file d'attente (201), et le second indicateur privé de lecture (221) correspondant soit modifié en conséquence,
- l'indicateur global de lecture (231) correspondant soit modifié en conséquence,
- le deuxième processus de réseau (102) consomme l'élément spécifique de la file d'attente (201), et le premier indicateur privé de consommation (212) correspondant soit modifié en conséquence,
- le troisième processus de réseau (103) consomme l'élément spécifique de la file d'attente (201), et le second indicateur privé de consommation (222) correspondant soit modifié en conséquence,
- l'indicateur global de consommation (232) correspondant soit modifié en conséquence, de manière que l'élément spécifique de la file d'attente (201) soit supprimé de la file d'attente (201).

12. Programme comprenant un code de programme lisible par ordinateur, qui, lorsqu'il est exécuté sur un ordinateur en communication avec un réseau de télécommunications (100) ou sur un nœud de réseau d'un réseau de télécommunications (100) ou sur une pluralité de nœuds de réseau d'un réseau de télécommunications (100), le réseau de télécommunications (100) comprenant une pluralité de nœuds de réseau (110, 111) exécutant au moins un premier processus de réseau (101) et un deuxième processus de réseau (102), fait mettre en œuvre à l'ordinateur ou au nœud de réseau du réseau de télécommunications (100) et/ou à la pluralité de nœuds de réseau du réseau de télécommunications (100) un procédé selon l'une des revendications 1 à 6.

13. Produit-programme informatique permettant d'utiliser un réseau de télécommunications (100), le produit-programme informatique comprenant le programme informatique selon la revendication 12 stocké sur un support de stockage.
